# EUROPEAN PATENT SPECIFICATION

(11) **EP 1 420 104 B1**
(45) Date of publication and mention of the grant of the patent: **16.05.2007**
(21) Application number: 02425697.6
(22) Date of filing: 15.11.2002
(51) Int. Cl.: D06F 58/28

(54) **Process for drying laundry in a drying device**
Verfahren zum Trocknen von Wäsche in einer Trocknungsvorrichtung
Procédé de séchage du linge dans un dispositif de séchage

(43) Date of publication of application: 19.05.2004
(73) Proprietor: CANDY S.p.A., 20052 Monza (Milano) (IT)
(72) Inventor: Fumagalli, Silvano, 20052 Monza (Milano) (IT)
(74) Representative: Crippa, Paolo Ernesto

(56) References cited:
- DE-A- 1 460 875
- DE-A- 19 725 536
- US-A- 3 213 548
- US-A- 4 206 552
- US-A- 4 385 451
- PATENT ABSTRACTS OF JAPAN vol. 2002, no. 06, 4 June 2002 (2002-06-04) & JP 2002 062048 A (TOKYO GAS CO LTD), 28 February 2002 (2002-02-28)

## Description

The present invention relates to a process for drying laundry in a drying device such as a drying machine, washer-drier or drying cabinet in which the laundry is dried by a flow of air.

The drying circuit of such drying devices typically comprises a drum-tub unit or laundry enclosure in the cabinet system, a suction unit, an air/water or air/air heat exchanger and a heating unit using electric resistors.

In a drying circuit known as the closed circuit, the airflow produced by the suction unit is heated by the electric resistors and conveyed into the drum or enclosure, where, as it passes through the wet laundry, it causes the water contained in the fabrics to evaporate off. In the heat exchanger, which is generally of the trickle type, the moist air is cooled by a flow of cold water or by a flow of fresh air. The cooling has the effect of condensing the vapour, which is collected and discharged together with the cooling water. The dehumified air is then extracted by the suction unit and recirculated.

In contrast, in a drying circuit known as an open circuit, the drying air is drawn in from the environment and, after having passed through the laundry and absorbed its moisture, is discharged directly into the environment.

The drying of laundry at present involves basically the following three distinct phases:

- an initial heating phase, in which a flow of heated air is conveyed into the laundry enclosure, heating the laundry to an upper threshold temperature;

- a main drying phase, in which the heated air is conveyed into the laundry enclosure, maintaining the temperature of the laundry between a lower threshold temperature and the said upper threshold temperature;

- and a final cooling phase in which a flow of cooling air is conveyed into the laundry enclosure to cool the laundry.

During the cooling phase, the heating resistors are turned off.
DE 19725536 and JP 2002 062048 A disclose methods according to the preambles of claim 1 and of claim 13.

Although in many ways satisfactory, prior-art drying systems consume a large amount of electrical energy. This drawback is especially significant as the need to save energy becomes evermore stringent.

The object of the present invention is therefore to provide a process for drying laundry in a drying machine or washer-drier of the type specified above, whereby the amount of energy required for drying is reduced to a minimum.

These and other objects are achieved by means of a process according to claim 1.

To enable the invention to be understood more clearly, a number of embodiments will now be described, by way of non-limiting example, referring to the appended drawings, in which:
Figure 1a is a diagram showing against time the temperature of the air (after passing through the laundry) during drying by a prior-art closed-circuit (condensed) drying process;
Figure 1b is a diagram showing against time the moisture content of the laundry during drying by the prior-art closed-circuit drying process;
Figure 1c is a diagram showing against time the power dissipated and the energy consumed during drying by the prior-art closed-circuit process;
Figures 2a to 2c show against time the temperature, moisture content, power and energy consumption during drying by a prior-art open-circuit (ventilated) drying process;
Figures 3a to 3c show against time the temperature, moisture content, power and energy consumption during drying by one embodiment of a closed-circuit (condensed) drying process according to the invention;
Figures 4a to 4c show against time the temperature, moisture content, power and energy consumption during drying by one embodiment of an open-circuit (ventilated) drying process according to the invention; and
Figures 5 and 6 show two embodiments of a drying device for implementing the drying process according to the invention.

With reference to the figures, a process for drying laundry placed in a laundry enclosure (or drum) 5 of a drying device 6 such as a drying machine, washer-drier or drying cabinet, comprises in its most general form at least one phase 1, 2 of drying the laundry in an airflow 7 which, after being heated by heating means 8 is conveyed into the laundry enclosure 5 by ventilation means 9 and a phase 4 of ventilating the laundry in an airflow 7 at ambient temperature conveyed into the laundry enclosure by the said ventilation means 9, in which the said drying process begins with the said ventilation phase 4, reducing the initial peak moisture content of the laundry by means of the said airflow 7 at ambient temperature.

Because of the steep gradient between the initial peak moisture content of the wet laundry and the humidity of the air, the use of air at ambient temperature rather than heated air enables the said peak moisture content to be evaporated off with less energy.

To optimize the drying process from the energy point of view, it has been shown to be advantageous to end the said ventilation phase 4 not before the moisture content U of the laundry has been reduced by 10%, preferably by from 10% to 50%, and still more preferably by from 15% to 35%. Various arrangements for controlling the duration T4 of the ventilation phase 4, in order to keep within the abovementioned parameters, will be described later.

Preferably, at the end of the ventilation phase 4, an initial heating phase 1 begins, in which an airflow 7 heated by the said heating means 8, preferably electric resistors or, alternatively, coil or plate radiators carrying fluid at a controlled temperature, is conveyed into the laundry enclosure 5 by the said ventilation means 9, preferably one or more fans or pumps, so that the laundry is heated to an upper threshold temperature.

After the initial heating phase 1 comes a main drying phase 2, in which the heated air is conveyed into the drying enclosure 5, maintaining the temperature of the laundry between a lower threshold temperature and the said upper threshold temperature. For this purpose there are preferably one or more thermal sensors 10a, 10b to measure the temperature of the airflow 7, this air temperature being also representative of the temperature of the laundry itself. Advantageously, the power supply to the heating means 8 is turned off if the temperature reading of the thermal sensors 10a, 10b rises above the upper threshold temperature and is turned on if the said temperature falls below the lower threshold temperature, particularly during the present main drying phase 2.

After the main drying phase 2, there preferably follows a final cooling phase 3, in which a cooling airflow 7 is conveyed, by the said ventilation means 8, into the laundry enclosure, to cool the laundry to a temperature at which the laundry can be taken out by hand.

The duration T4 of the ventilation phase 4 is advantageously greater than the total duration T1+T2 of the initial heating phase 1 and the main drying phase 2.

In one embodiment, the heating means 8 remains off throughout the ventilation phase 4.

With particular reference to drying with drying machines or washer-driers, it is advantageous to provide, during the drying process, a rotary, preferably alternating movement of the drum 5 to agitate the laundry, thus exposing much of its surface to the airflow 7.

In one embodiment the power supplies to the heating means 8 and ventilation means 9 are controlled by a control unit 11 in order to control, preferably independently, both the air flowrate and the power dissipated by the heating means 8 and hence the temperature of the conveyed air.

In another embodiment, the duration T4 of the ventilation phase 4 is entered by hand by the user through setting means, e.g. mechanical or electrical switches, preferably a selection knob 12, connected to the said control unit 11.

The value of the said duration T4 is advantageously determined from a table or diagrams, in which the duration T4 is given as a function of the mass or quantity of laundry and optionally of the type of fabric, as well as of the particular characteristics of the drying device 6, such as the power of the fan means 9, the number of revolutions of the laundry enclosure 5 and the target values for the reduction of the moisture content of the laundry, advantageously from 10% to 50%, and still more advantageously from 15% to 35%. These target values are particularly suitable for achieving an energy saving if the initial moisture content U of the laundry is between 50% and 90% (of the mass of wet laundry), and preferably between 65% and 75%.

Advantageously, also the duration of one or more of the three successive phases - that is, the initial heating phase 1, the main drying phase 2 and the final cooling phase 3 - may also be entered through the said setting means 12.

In one embodiment, a first thermal sensor 10b of the said thermal sensors 10a, 10b is placed in the airflow 7 downstream of the laundry enclosure 5 to detect the temperature of the air immediately after its passage through the laundry. It is also advantageous to provide a second thermal sensor 10a upstream of the laundry enclosure 5, preferably in the section between the heating means 8 and the laundry enclosure 5, to detect the temperature of the air, optionally heated by the said heating means 8, before it goes through the laundry. The data relating to the temperature readings are transmitted to the control unit 11, which estimates the moisture content of the laundry on the basis of the difference between the temperatures of the air upstream and downstream of the laundry enclosure and, advantageously, determines the duration T4 of the ventilation phase 4 on the basis of the measured values and of the target values for the reduction of the moisture content U of the laundry.

In one embodiment, the temperature is read and the power supply to the heating means 8 is controlled, for example by the control unit 11, at regular intervals or continuously.

One embodiment also uses sensor means to detect the moisture content U of the laundry, for example by measuring the electrical conductivity of the said laundry. For this purpose use is made of a conductivity sensor (not shown in the figures) that comprises at least two metal electrodes (in contact with the laundry) inside the laundry enclosure 5. The conductivity readings, which give an indication of the amount of water held in the fabrics, are sent to the control unit 11, which determines the duration T4 of the ventilation phase and optionally the duration of one or more of the subsequent phases 1, 2, 3 on the basis of the measured values and of the target values for the reduction of the moisture content of the laundry.

In one especially advantageous embodiment, the power supplies to the heating means 8 and fan means 9, and consequently the duration of the individual phases 1, 2, 3, 4, are calculated by the control unit 11 on the basis of the temperature and/or conductivity readings and optionally of the values entered by the user, taking account of the target values for the reduction of the moisture content of the laundry, particularly during the ventilation phase 4.

For this purpose the control unit 11 advantageously uses operating graphs obtained from a series of systematic tests, in which the technical parameters of the drying device, such as the heating and ventilation power, and the parameters of the laundry to be dried, such as mass or quantity, moisture content, type of fabric etc., are varied to determine the duration T4 of the ventilation phase 4 and also, advantageously, the duration of the subsequent phases 1, 2, 3, in such a way as to achieve the desired target values for the reduction of the moisture content.

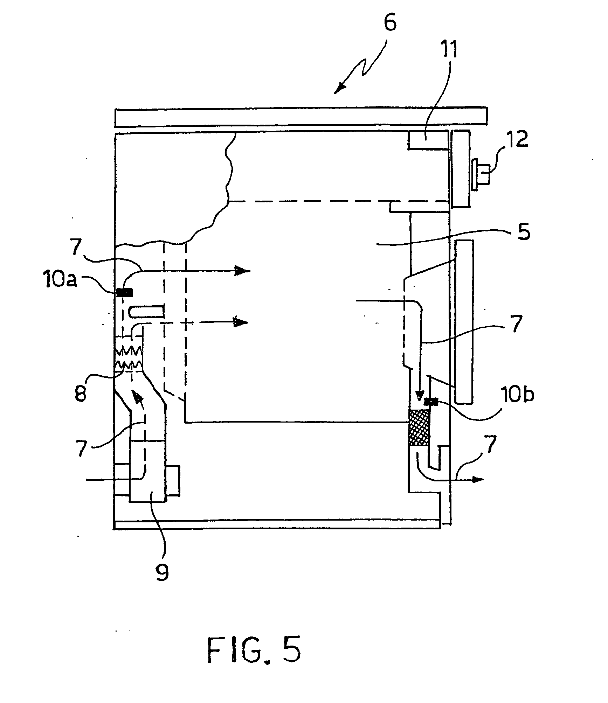

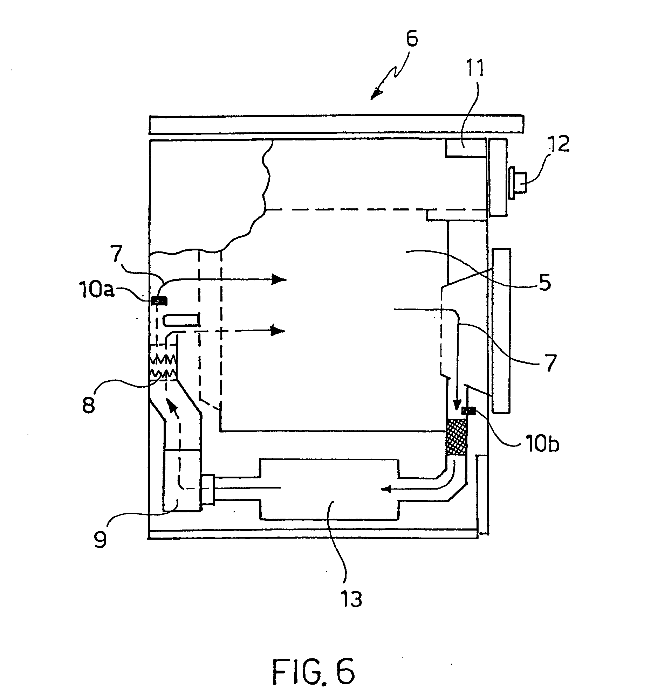

The drying process described above may of course be carried out both using an open circuit (Figure 5), that is, by taking in "fresh" air from the environment, heating and conveying the air, or just conveying it (depending on which phase the process is in) into the laundry enclosure 5, where it travels through the laundry, carrying away the moisture U, and subsequently discharging the moist air into the environment; and using a closed circuit (Figure 6), in which, after passing through the laundry, the air 7 is dehumidified by cooling and condensing the moisture U held in it by way of a heat exchanger 13, after which it is extracted by the fan means 9 and recycled.

There now follow two examples of applications of the process according to the invention, showing its advantages.

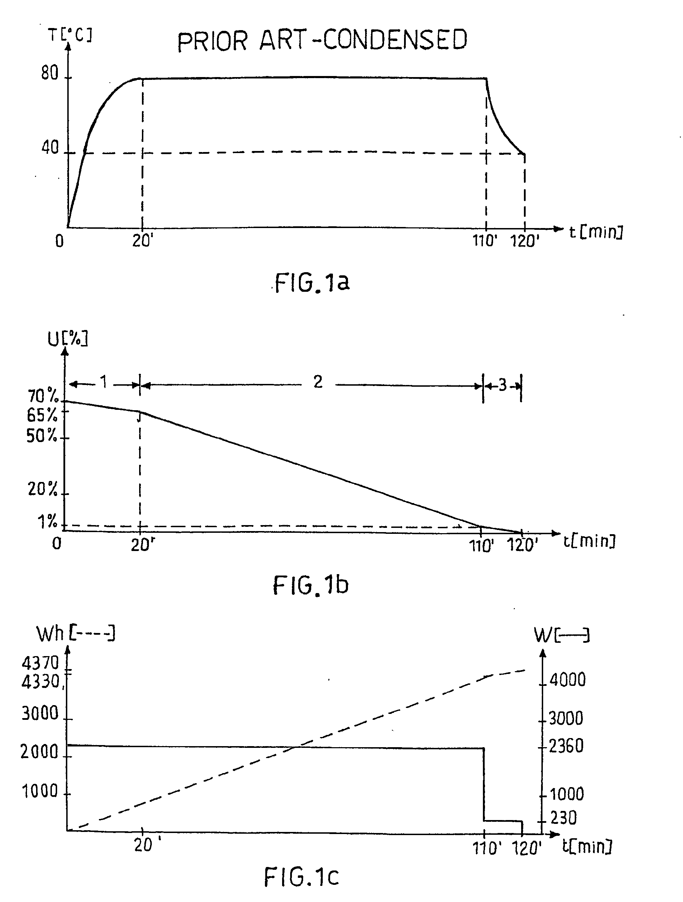

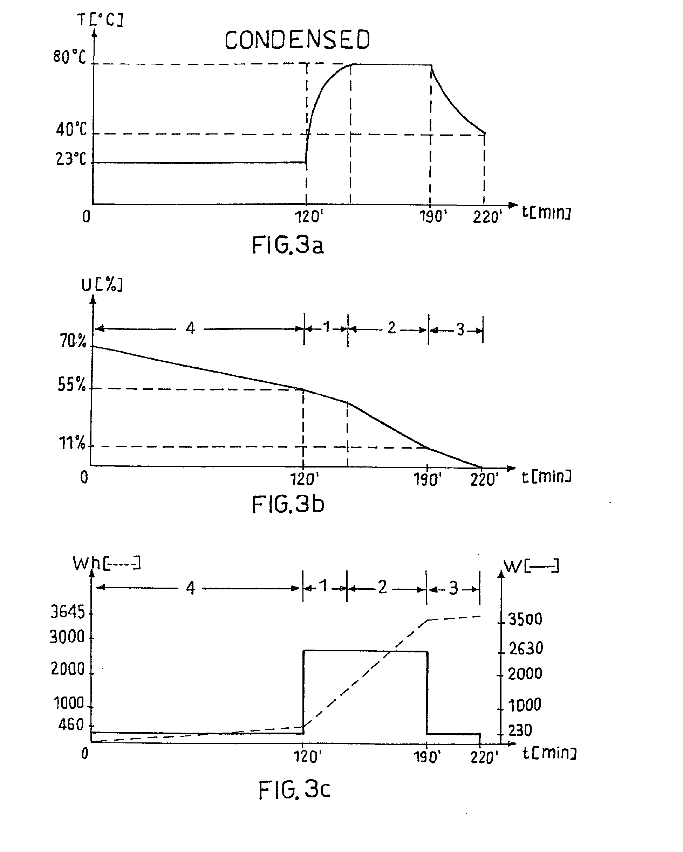

Figures 1a, 1b and 1c (prior art) and Figures 3a, 3b and 3c (process according to the invention) show the results of a comparative test in which 6 kg of wet laundry were dried by a closed-circuit (condensed) process.

The process of the prior art involves an initial heating phase 1, in which by operating the drying device at a total power of 2360 watts, the temperature of the air downstream of the laundry enclosure rises after 20 minutes to a temperature of 80°C. The moisture content U of the laundry drops from an initial value of 70% (of the mass of the wet laundry) to a value of 65%.

Following this, in the main drying phase, which lasts 90 minutes and runs at a total power of 2360 watts, the temperature is maintained at approximately 80°C and the moisture content U falls from 65% to 1%.

In the subsequent final cooling phase, which lasts 10 minutes and runs at a total power of 230 watts, the temperature is lowered from 80°C to 40°C and the moisture content U decreases from 1% to a value of about 0%.

The total energy consumption for this drying process amounts to 4370 Wh (watt-hours).

In comparison, the process according to the invention begins with the ventilation phase 4 (heating resistors off), which lasts 120 minutes, at a temperature of 23°C, total power of the drying device 230 watts, during which the moisture content U falls from 70% (of the mass of the wet laundry) to 55%.

Following this, during the initial heating phase 1, which lasts 24 minutes and runs at a power of 2630 watts, the temperature of the air downstream of the laundry enclosure reaches a value of 80°C and the moisture content U of the laundry falls from 55% to 38%.

During the subsequent main drying phase 2, which lasts 42 minutes and runs at a total power of 2360 watts, the temperature is maintained at approximately 80°C and the moisture content U falls from 38% to 11%.

During the subsequent final cooling phase 3, which lasts 30 minutes and runs at a total power of 230 watts, the temperature is lowered from 80°C to 40°C and the moisture content U decreases from 11% to about 0%.

The total energy consumption for the drying process amounts to only 3645 Wh (watt-hours). The energy saving compared with the process of the prior art is 17%.

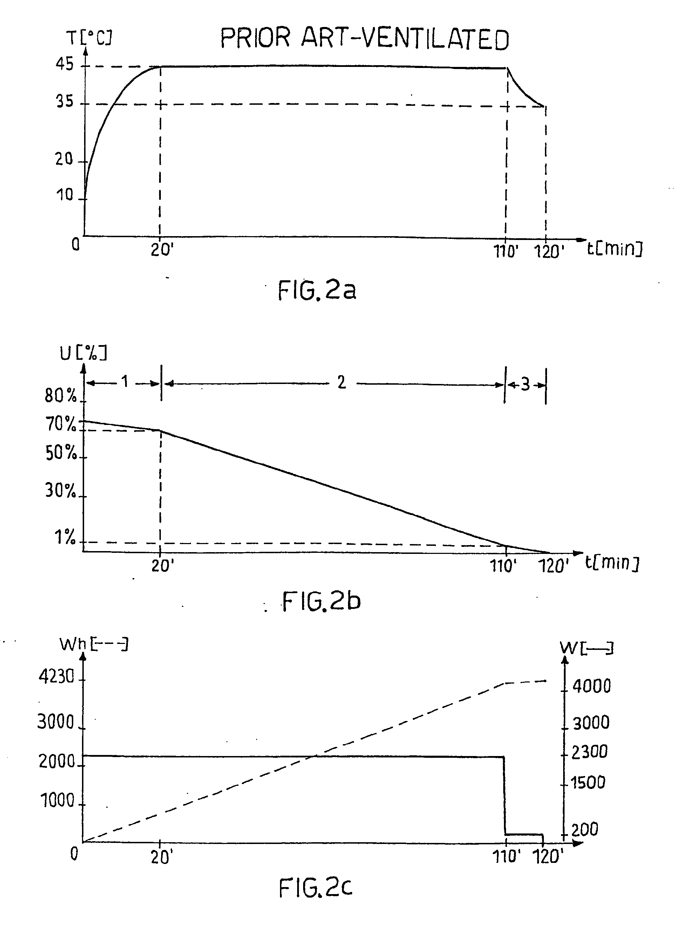

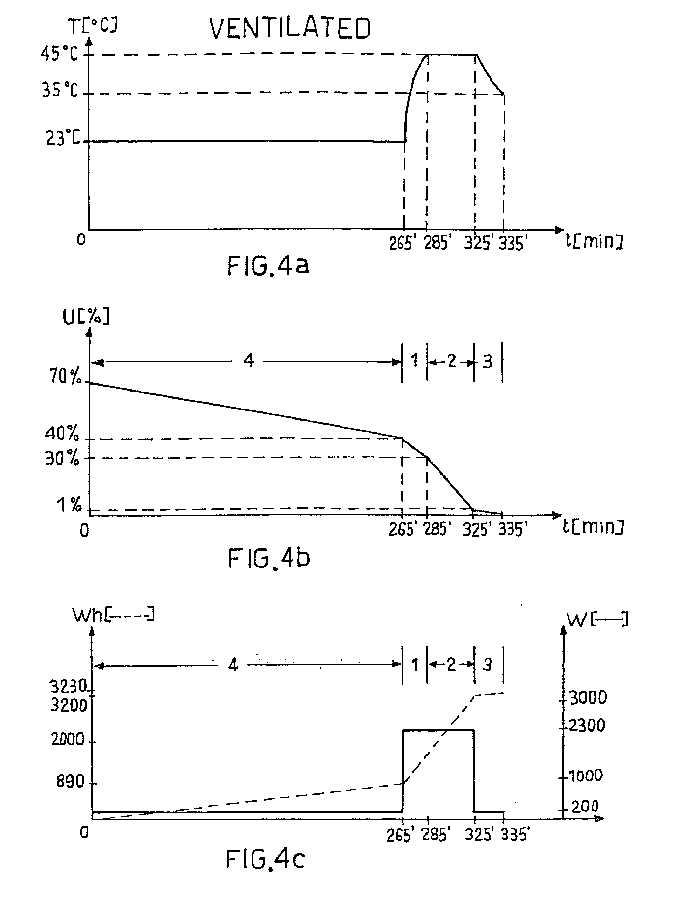

Figures 2a, 2b, and 2c (prior art) and Figures 4a, 4b and 4c (process according to the invention) show the results of a comparative test in which 6 kg of wet laundry was dried by an open-circuit (ventilated) process.

The process of the prior art involves an initial heating phase 1, in which by running the drying device at a total power of 2300 watts, the temperature of the air downstream of the laundry enclosure rises after 20 minutes to 45°C. The moisture content U of the laundry falls from an initial value of 70% (of the mass of the wet laundry) to a value of 65%.

During the subsequent main drying phase 2, which lasts 90 minutes and runs at a total power of 2300 watts, the temperature is maintained at approximately 45°C and the moisture content U falls from 65% to 1%.

During the subsequent final cooling phase 3, which lasts 10 minutes and runs at a total power of 200 watts, the temperature is lowered from 45°C to 35°C and the moisture content U falls from 1% to approximately 0%.

The total energy consumption for the drying process amounts to 4230 Wh (watt-hours).

In comparison, the process according to the invention begins with the ventilation phase 4 (heating resistors off) which lasts 265 minutes, temperature 23°C and total power of the drying device 200 watts, during which the moisture content U falls from 70% (of the mass of the wet laundry) to 40%.

During the subsequent initial heating phase 1, which lasts 20 minutes, power 2300 watts, the temperature of the air downstream of the laundry enclosure rises to a temperature of 45°C and the moisture content U of the laundry falls from 40% to 30%.

During the subsequent main drying phase 2, which lasts 40 minutes, total power 2300 watts, the temperature is maintained at approximately 45°C and the moisture content U falls from 30% to 1%.

During the subsequent final cooling phase 3, which lasts 10 minutes and runs at a total power of 200 watts, the temperature is lowered from 45°C to 35°C and the moisture content U decreases from 1% to approximately 0%.

The total energy consumption for the drying process amounts to only 3230 Wh (watt-hours). The energy saving compared with the process of the prior art is 24%.

The process according to the invention is highly advantageous as it saves energy, allowing economical operation of the drying device 6, such as a washer-drier or drying machine, and meets more stringent standards (energy label).

Furthermore, the working intervals of the heating means 8, which may be electric resistors, are advantageously reduced, which increases the life of these components.

Clearly, in order to satisfy particular contingent requirements, a person skilled in the art will be able to make further modifications and alterations to the drying process and device according to the invention, which will still lie within the scope of protection of the invention as defined by the following claims.

## Claims

1. Process for drying laundry placed in a laundry enclosure or drum (5) of a drying device (6) such as a drying machine, washer-drier or drying cabinet, the said process comprising one or more phases (1, 2) of drying the laundry in an airflow (7) heated by heating means (8) and conveyed into the laundry enclosure (5) by ventilation means (9) and a phase (4) of ventilating the laundry in an airflow (7) at ambient temperature conveyed into the laundry enclosure (5) by the said ventilation means (9), in which the said drying process begins with the said ventilation phase (4), reducing the initial peak moisture content of the laundry by means of the said airflow (7) at ambient temperature,
**characterised in that** the process comprises the phases of:
- detecting the moisture content (U) of the laundry;
- determining the duration (T4) of the ventilation phase (4) on the basis of the moisture content (U) of the laundry and of a target value for the reduction of the moisture content (U), in order to end said ventilation phase (4) not before the initial moisture content (U) of the laundry has been reduced by 10%, preferably by from 10% to 50%.

2. Process according to claim 1, wherein the phase of detecting the moisture content (U) of the laundry is carried out by means of:
A) measuring the electrical conductivity of the said laundry or
B) measuring the temperature of the airflow (7) upstream and downstream of the laundry enclosure (5), calculating the temperature difference between the air upstream and that downstream of the laundry enclosure and estimating the moisture content of the laundry on the basis of the said calculated temperature difference.

3. Process according to Claim 1 or 2, comprising the following phases:
- the said ventilation phase (4),
- a subsequent initial heating phase (1), in which the heated air (7) is conveyed into the laundry enclosure (5), heating the laundry to an upper threshold temperature,
- and a subsequent main drying phase (2), in which the heated air (7) is conveyed into the laundry enclosure (5), maintaining the temperature of the laundry between a lower threshold temperature and the said upper threshold temperature, in which the duration T4 of the ventilation phase (4) is equal to or greater than the total duration T1+T2 of the initial heating phase (1) and the main drying phase (2).

4. Process according to any one of the preceding claims, comprising the step of keeping the said heating means (8) off during the said ventilation phase (4).

5. Process according to any one of the preceding claims, in which the said laundry enclosure (5), particularly the drum of a washer-drier or drying machine, is caused to rotate, preferably with an alternating movement.

6. Process according to any one of the preceding claims, in which the power supplies to the said heating means (8) and to the said ventilation means (9) are controlled independently.

7. Process according to any one of the preceding claims, in which the duration T4 of the ventilation phase (4) is calculated as a function of the mass or quantity of laundry, the particular specifications of the drying device (6) and the target values for the reduction of the moisture content of the laundry.

8. Process according to any one of the preceding claims, comprising the step of measuring the temperature of the airflow (7) and controlling the power supply to the heating means (8) and/or to the ventilation means (9) on the basis of the temperature readings.

9. Process according to claim 8, comprising the following steps:
- measuring the temperature of the airflow (7) upstream and downstream of the laundry enclosure (5);
- calculating the temperature difference between the air upstream and that downstream of the laundry enclosure;
- estimating the moisture content of the laundry on the basis of the said calculated temperature difference; and
- determining the duration T4 of the ventilation phase (4) on the basis of the estimated moisture content of the laundry and the target values for the reduction of the moisture content U of the laundry.

10. Process according to either of Claims 8 and 9, comprising the step of turning off the power supply to the heating means (8) if the temperature reading rises above the said upper threshold temperature and turning on the power supply to the heating means (8) if the said temperature falls below the lower threshold temperature, during the main drying phase (2).

11. Process according to any one of the preceding claims, comprising the step of measuring the electrical conductivity of the laundry and controlling the power supply to the heating means (8) and/or to the ventilation means (9) on the basis of the measured conductivities and on the target values for the reduction of the moisture content of the laundry.

12. Process according to any one of the preceding claims, in which the air (7), after having passed through the laundry, is dehumidified and reused.

13. Drying device (6) such as a drying machine, washer-drier or drying cabinet, comprising:
- a laundry enclosure (5) for holding the laundry to be dried,
- ventilation means (9) for conveying an airflow (7) into the said laundry enclosure (5)
- heating means (8) for heating the said airflow (7);
- a control unit (11) which controls the ventilation means (9) and the heating means (8) in a manner to carry out a drying process having one or more phases (1, 2) of drying the laundry in said heated airflow (7) and a phase (4) of ventilating the laundry in an airflow (7) at ambient temperature, in which the said drying process begins with the said ventilation phase (4), reducing the initial peak moisture content of the laundry by means of the said airflow (7) at ambient temperature,
**characterised in that** the drying devise (6) comprises means for detecting the moisture content (U) of the laundry and **in that** said control unit (11) determines the duration (T4) of said ventilation phase (4) on the basis of said moisture content (U) of the laundry and of a target value for the reduction of the moisture content (U), in order to end said ventilation phase (4) not before the initial moisture content (U) of the laundry has been reduced by 10%, preferably by from 10% to 50%.

14. Device (6) according to Claim 13, comprising a control unit (11) for independently controlling the power supplies of the heating means (8) and of the ventilation means (9).

15. Device (6) according to Claim 14, comprising setting means (12), preferably mechanical or electrical switches, in communication with the said control unit (11) for entering the duration of the ventilation phase (4) and/or the duration of one or more of the subsequent phases, namely the initial phase (1) and the drying phase (2).

16. Device (6) according to either of Claims 14 and 15, comprising one or more thermal sensors (10a, 10b) to measure the temperature of the airflow (7) and transmit the data relating to the temperature readings to the control unit (11).

17. Device (6) according to any one of Claims 14 to 16, comprising an electrical conductivity sensor with at least two metal electrodes to detect the electrical conductivity of the laundry in the laundry enclosure (5) and transmit the detected conductivities to the control unit (11).

18. Device (6) according to any one of Claims 13 to 17, comprising a heat exchanger (13) to dehumidify the airflow downstream of the laundry enclosure (5), and a system of pipes to reintroduce the dehumified air into the laundry enclosure (5).

## Patentansprüche

1. Verfahren zum Trocknen von Wäsche, die in einem Wäschebehälter oder einer Trommel (5) einer Trockenvorrichtung (6), wie zum Beispiel einem Trockenautomaten, einem Waschtrockner oder einem Trockenschrank, angeordnet ist, wobei das Verfahren eine Phase oder mehrere Phasen (1, 2) des Trocknens der Wäsche in einem Luftstrom (7), der durch eine Heizeinrichtung (8) erwärmt wird und durch Belüftungseinrichtungen (9) in den Wäschebehälter (5) gefördert wird, und eine Phase (4) des Belüftens der Wäsche in einem Luftstrom (7) mit Umgebungstemperatur, der durch die Belüftungseinrichtungen (9) in den Wäschebehälter (5) gefördert wird, umfasst, wobei das Verfahren zum Trocknen mit der Belüftungsphase (4), den anfänglichen Höchstfeuchtigkeitsgehalt der Wäsche mittels des Luftstroms (7) bei Umgebungstemperatur reduzierend, beginnt,
**dadurch gekennzeichnet, dass** das Verfahren die folgenden Phasen umfasst:
- Erfassen des Feuchtigkeitsgehalts (U) der Wäsche,
- Bestimmen der Dauer (T4) der Belüftungsphase (4) auf Basis des Feuchtigkeitsgehalts (U) der Wäsche und eines Soll-Wertes für die Verringerung des Feuchtigkeitsgehalts (U), um die Belüftungsphase (4) nicht zu beenden, bevor der anfängliche Feuchtigkeitsgehalt (U) der Wäsche um 10%, bevorzugt um von 10% bis 50%, verringert worden ist.

2. Verfahren nach Anspruch 1, wobei die Phase des Erfassens des Feuchtigkeitsgehalts (U) der Wäsche ausgeführt wird durch:
A) Messen der elektrischen Leitfähigkeit der Wäsche oder
B) Messen der Temperatur des Luftstroms (7) stromaufwärts und stromabwärts des Wäschebehälters (5), Berechnen der Temperaturdifferenz zwischen der Luft stromaufwärts und derjenigen stromabwärts des Wäschebhälters und Schätzen des Feuchtigkeitsgehalts der Wäsche auf Basis der berechneten Temperaturdifferenz.

3. Verfahren nach Anspruch 1 oder 2, das die folgenden Phasen umfasst:
- die Belüftungsphase (4),
- eine sich anschließende anfängliche Erwärmungsphase (1), in der die erwärmte Luft (7) in den Wäschebehälter (5) gefördert wird, die die Wäsche auf eine obere Schwellenwerttemperatur erwärmt,
- und eine sich anschließende Haupttrockenphase (2), in der die erwärmte Luft (7) in den Wäschebehälter (5) gefördert wird, die Temperatur der Wäsche zwischen einer unteren Schwellenwerttemperatur und der oben Schwellenwerttemperatur vorhaltend, wobei die Dauer T4 der Belüftungsphase der Gesamtdauer T1 + T2 der anfänglichen Erwärmungsphase (1) und der Haupttrockenphase (2) entspricht oder größer als diese ist.

4. Verfahren nach einem der vorhergehenden Ansprüche, das den Schritt umfasst, dass die Heizeinrichtung (8) während der Belüftungsphase (4) abgeschaltet vorgehalten wird.

5. Verfahren nach einem der vorhergehenden Ansprüche, wobei der Wäschebehälter (5), insbesondere die Trommel eines Waschtrockners oder eines Trockenautomaten, veranlasst wird, zu drehen, bevorzugt mit einem Wechselmoment.

6. Verfahren nach einem der vorhergehenden Ansprüche, wobei die Leistungsversorgungen für die Heizeinrichtungen (8) und für die Belüftungseinrichtungen (9) unabhängig gesteuert werden.

7. Verfahren nach einem der vorhergehenden Ansprüche, wobei die Dauer T4 der Belüftungsphase (4) als eine Funktion der Masse oder Menge der Wäsche, der besonderen Spezifikationen der Trockenvorrichtung (6) und der Soll-Werte für die Verringerung des Feuchtigkeitsgehalts der Wäsche berechnet wird.

8. Verfahren nach einem der vorhergehenden Ansprüche, das den Schritt des Messens der Temperatur des Luftstroms (7) und des Steuerns der Leistungsversorgung für die Heizeinrichtungen (8) und/oder für die Belüftungseinrichtungen (9) auf Basis der Temperaturmesswerte umfasst.

9. Verfahren nach Anspruch 9, das die folgenden Schritte umfasst:
- Messen der Temperatur des Luftstroms (7) stromaufwärts und stromabwärts von des Wäschebehälters (5),
- Berechnen der Temperaturdifferenz zwischen der Luft stromaufwärts und derjenigen stromabwärts des Wäschebehälters,
- Schätzen des Feuchtigkeitsgehalts auf Basis der berechneten Temperaturdifferenz und
- Bestimmen der Dauer T4 der Belüftungsphase (4) auf Basis des geschätzten Feuchtigkeitsgehalts der Wäsche und der Soll-Werte für die Verringerung des Feuchtigkeitsgehalts U der Wäsche.

10. Verfahren nach einem der Ansprüche 8 und 9, das den Schritt des Abschaltens der Leistungsversorgung für die Heizeinrichtungen (8), wenn der Temperaturmesswert die obere Schwellenwerttemperatur übersteigt, und den Schritt des Einschaltens der Leistungsversorgung für die Heizeinrichtungen (8), wenn die Temperatur während der Haupttrockenphase (2) unter die untere Schwellenwerttemperatur abfällt, umfasst.

11. Verfahren nach einem der vorhergehenden Ansprüche, das den Schritt des Messens der elektrischen Leitfähigkeit der Wäsche und des Steuerns der Leistungsversorgung für die Heizeinrichtungen (8) und/oder die Belüftungseinrichtungen (9) auf Basis der gemessenen Leitfähigkeiten und der Soll-Werte für die Verringerung des Feuchtigkeitsgehalts der Wäsche umfasst.

12. Verfahren nach einem der vorhergehenden Ansprüche, wobei die Luft (7), nachdem sie durch die Wäsche gegangen ist, entfeuchtet und erneut verwendet wird.

13. Trockenvorrichtung (6), wie zum Beispiel ein Trockenautomat, ein Waschtrockner oder ein Trockenschrank, umfassend:
- einen Wäschebehälter (5) zum Enthalten der zu trocknenden Wäsche,
- Belüftungseinrichtungen (9) zum Fördern eines Luftstroms (7) in den Wäschebehälter (5),
- Heizeinrichtungen (8) zum Erwärmen des Luftstroms (7),
- eine Steuereinheit (11), die die Belüftungseinrichtungen (9) und die Heizeinrichtungen (8) in einer Art und Weise steuert, um ein Verfahren zum Trocknen mit einer Phase oder mit mehreren Phasen (1, 2) des Trocknens der Wäsche in dem erwärmten Luftstrom (7) und eine Phase (4) des Belüftens der Wäsche in einem Luftstrom (7) mit Umgebungstemperatur auszuführen, wobei das Verfahren zum Trocknen mit der Belüftungsphase (4), den anfänglichen Höchstfeuchtigkeitsgehalt der Wäsche mittels des Luftstroms (7) mit Umgebungstemperatur reduzierend, beginnt,
**dadurch gekennzeichnet, dass** die Trockenvorrichtung (6) Einrichtungen zum Erfassen des Feuchtigkeitsgehalts (U) der Wäsche umfasst und dass die Steuereinheit (11) die Dauer (T4) der Belüftungsphase (4) auf Basis des Feuchtigkeitsgehalts (U) der Wäsche und eines Soll-Wertes für das Verringern des Feuchtigkeitsgehalts (U) bestimmt, um die Belüftungsphase (4) nicht zu beenden, bevor der anfängliche Feuchtigkeitsgehalt (U) der Wäsche um 10%, bevorzugt um von 10% bis 50%, verringert worden ist.

14. Vorrichtung (6) nach Anspruch 13, die eine Steuereinheit (11) zum unabhängigen Steuern der Leistungszuführungen für die Heizeinrichtungen (8) und für die Belüftungseinrichtungen (9) umfasst.

15. Vorrichtung (6) nach Anspruch 14, die Einstelleinrichtungen (12), bevorzugt mechanische oder elektrische Schalter, in Verbindung mit der Steuereinheit (11) zum Eingeben der Dauer der Belüftungsphase (4) und/oder der Dauer von einer nachfolgenden Phase oder von mehreren nachfolgenden Phasen, d. h. der Anfangsphase (1) und der Trockenphase (2), umfasst.

16. Vorrichtung (6) nach einem der Ansprüche 14 und 15, die einen Thermosensor oder mehrere Thermosensoren (10a, 10b) umfasst, um die Temperatur des Luftstroms (7) zu messen und um die Daten, die sich auf die Temperaturmesswerte beziehen, zu der Steuereinheit (11) zu übertragen.

17. Vorrichtung (6) nach einem der Ansprüche 14 bis 16, die einen elektrisch leitfähigen Sensor mit wenigstens zwei Metallelektroden umfasst, um die elektrische Leitfähigkeit der Wäsche in dem Wäschebehälter (5) zu erfassen und die erfassten Leitfähigkeiten an die Steuereinheit (11) zu senden.

18. Vorrichtung (6) nach einem der Ansprüche 13 bis 17, die einen Wärmeaustauscher (13), um den Luftstrom stromabwärts von dem Wäschebehälter (5) zu entfeuchten, und ein Rohrleitungssystem, um die entfeuchtete Luft erneut in den Wäschebehälter (5) einzuleiten, umfasst.

## Revendications

1. Procédé de séchage de linge placé dans une enceinte ou un tambour (5) à linge d'un appareil de séchage (6) tel qu'un sèche-linge, une machine à laver et sécher ou une armoire de séchage, ledit procédé comprenant une ou plusieurs phases (1, 2) de séchage du linge dans un courant d'air (7) chauffé par un moyen chauffant (8) et introduit dans l'enceinte (5) à linge par un moyen de ventilation (9) et une phase (4) de ventilation du linge dans un courant d'air (7) à température ambiante introduit dans l'enceinte à linge (5) par ledit moyen de ventilation (9), dans lequel ledit procédé de séchage commence avec ladite phase (4) de ventilation, abaissant la teneur maximale initiale en humidité du linge au moyen dudit courant d'air (7) à la température ambiante,
**caractérisé en ce que** le procédé comprend les phases qui consistent :
- à détecter la teneur en humidité (U) du linge ;
- à déterminer la durée (T4) de la phase de ventilation (4) sur la base de la teneur en humidité (U) du linge et d'une valeur de consigne pour la réduction de la teneur en humidité (U), afin que ladite phase (4) de ventilation ne s'achève pas avant que la teneur initiale (U) en humidité du linge ait été abaissée de 10 %, avantageusement de 10 % à 50 %.

2. Procédé selon la revendication 1, dans lequel la phase de détection de la teneur (U) en humidité du linge est exécutée au moyen de :
A) une mesure de la conductivité électrique du linge, ou
B) une mesure de la température du courant d'air (7) en amont et en aval de l'enceinte à linge (5), un calcul de la différence de température entre l'air d'amont et l'air d'aval de l'enceinte à linge et une estimation de la teneur en humidité du linge sur la base de ladite différence de température calculée.

3. Procédé selon la revendication 1 ou 2, comprenant les phases suivantes :
- ladite phase (4) de ventilation,
- une phase subséquente (1) de chauffage initial, dans laquelle l'air chauffé (7) est introduit dans l'enceinte à linge (5), chauffant le linge jusqu'à une température de seuil supérieur,
- et une phase subséquente (2) de séchage principal, dans laquelle l'air chauffé (7) est introduit dans l'enceinte à linge (5), maintenant la température du linge entre une température de seuil inférieur et ladite température de seuil supérieur, dans laquelle la durée T4 de la phase (4) de ventilation est égale ou supérieure à la durée totale T1 + T2 de la phase de chauffage initiale (1) et de la phase de séchage principale (2).

4. Procédé selon l'une quelconque des revendications précédentes, comprenant l'étape de maintient dudit moyen chauffant (8) arrêté pendant la phase (4) de ventilation.

5. Procédé selon l'une quelconque des revendications précédentes, dans lequel ladite enceinte à linge (5), en particulier le tambour d'une machine à laver et sécher ou d'une machine de séchage, est mise en rotation, avantageusement avec un mouvement alternatif.

6. Procédé selon l'une quelconque des revendications précédentes, dans lequel les alimentations en énergie dudit moyen chauffant (8) et dudit moyen de ventilation (9) sont commandées de façon indépendante.

7. Procédé selon l'une quelconque des revendications précédentes, dans lequel la durée T4 de la phase de ventilation (4) est calculée en fonction de la masse ou la quantité de linge, des spécifications particulières de l'appareil de séchage (6) et des valeurs de consigne pour la réduction de la teneur en humidité du linge.

8. Procédé selon l'une quelconque des revendications précédentes, comprenant l'étape de mesure de la température du courant d'air (7) et de commande de l'alimentation en énergie du moyen chauffant (8) et/ou du moyen de ventilation (9) sur la base des valeurs de température lues.

9. Procédé selon la revendication 8, comprenant les étapes suivantes :
- une mesure de la température du courant d'air (7) en amont et en aval de l'enceinte à linge (5) ;
- un calcul de la différence de température entre l'air en amont et l'air en aval de l'enceinte à linge ;
- une estimation de la teneur en humidité du linge sur la base de ladite différence de température calculée ; et
- une détermination de la durée T4 de la phase (4) de ventilation sur la base de la teneur en humidité estimée du linge et des valeurs de consigne pour la réduction de la teneur en humidité (U) du linge.

10. Procédé selon chacune des revendications 8 et 9, comprenant l'étape d'arrêt de l'alimentation en énergie du moyen chauffant (8) si la valeur de température lue s'élève au-dessus de ladite température de seuil supérieur et la mise en marche de l'alimentation en énergie du moyen chauffant (8) si ladite température tombe en-dessous de la température de seuil inférieur, pendant la phase (2) de séchage principal.

11. Procédé selon l'une quelconque des revendications précédentes, comprenant l'étape de mesure de la conductivité électrique du linge et de commande de l'alimentation en énergie du moyen chauffant (8) et/ou du moyen de ventilation (9) sur la base des conductivités mesurées et des valeurs de consigne pour la réduction de la teneur en humidité du linge.

12. Procédé selon l'une quelconque des revendications précédentes, dans lequel l'air (7), après être passé à travers le linge, est déshumidifié et réutilisé.

13. Appareil de séchage (6) tel qu'une machine de séchage, une machine à laver et sécher ou une armoire de séchage, comportant :
- une enceinte à linge (5) destinée à contenir le linge devant être séché,
- un moyen de ventilation (9) destiné à introduire un courant d'air (7) dans ladite enceinte à linge (5),
- un moyen chauffant (8) destiné à chauffer ledit courant d'air (7) ;
- une unité de commande (11) qui commande le moyen de ventilation (9) et le moyen chauffant (8) de manière à exécuter un procédé de séchage ayant une ou plusieurs phases (1, 2) de séchage du linge dans ledit courant d'air chauffé (7) et une phase (4) de ventilation du linge dans un courant d'air (7) à température ambiante, dans lequel ledit procédé de séchage commence avec ladite phase (4) de ventilation, abaissant la teneur en humidité maximale initiale du linge au moyen dudit courant d'air (7) à température ambiante,
**caractérisé en ce que** l'appareil de séchage (6) comporte un moyen pour détecter la teneur en humidité (U) du linge et **en ce que** ladite unité de commande (11) détermine la durée (T4) de ladite phase (4) de ventilation sur la base de ladite teneur en humidité (U) du linge et d'une valeur de consigne pour la réduction de la teneur en humidité (U), afin que ladite phase (4) de ventilation ne s'arrête pas avant que la teneur en humidité initiale (U) du linge ait été abaissée de 10 %, avantageusement de 10 % à 50 %.

14. Appareil (6) selon la revendication 13, comportant une unité de commande (11) pour commander de façon indépendante les alimentations en énergie du moyen chauffant (8) et du moyen de ventilation (9).

15. Appareil (6) selon la revendication 14, comportant un moyen de réglage (12), avantageusement des commutateurs mécaniques ou électriques, en communication avec ladite unité de commande (11) pour l'entrée de la durée de la phase de ventilation (4) et/ou de la durée d'une ou plusieurs des phases suivantes, à savoir la phase initiale (1) et la phase de séchage (2).

16. Appareil (6) selon chacune des revendications 14 et 15, comportant un ou plusieurs capteurs thermiques (10a, 10b) pour mesurer la température du courant d'air (7) et transmettre les données concernant les valeurs de température lues à l'unité de commande (11).

17. Appareil (6) selon l'une quelconque des revendications 14 à 16, comportant un capteur de conductivité électrique ayant au moins deux électrodes métalliques pour détecter la conductivité électrique du linge dans l'enceinte à linge (5) et transmettre les conductivités détectées à l'unité de commande (11).

18. Appareil (6) selon l'une quelconque des revendications 13 à 17, comportant un échangeur de chaleur (13) pour déshumidifier le courant d'air en aval de l'enceinte à linge (5), et un système de conduits pour réintroduire l'air déshumidifié dans l'enceinte à linge (5).
